# EUROPEAN PATENT APPLICATION

(11) **EP 2 653 251 A1**
(43) Date of publication of application: **23.10.2013**
(21) Application number: 13164247.2
(22) Date of filing: 18.04.2013
(51) Int. Cl.: B23D 47/12

(54) **Sawing unit for wood**

(30) Priority: 18.04.2012 IT MO20120101
(71) Applicant: SCM Group S.p.A., 47900 Rimini (IT)
(72) Inventor: Ratti, Federico, 47824 Poggio Berni (Rimini) (IT)
(74) Representative: Villanova, Massimo

(57) **Abstract**

A sawing unit (5) for machining wooden workpieces or workpieces made of a material equivalent to wood on a horizontal machining plane is disclosed, in which a blade (4) is carried by a blade carriage (8) that is movable to vary the height of the blade (4); a blade drive motor (11) is carried by a movable motor carriage (10) on a horizontal linear sliding guide; two endless flexible tensile members (13, 16) transmit motion from the motor (11) to the blade (4); a connecting rod (15) is connected at its ends to the blade carriage (8) and to the motor carriage (10).

## Description

### Background of the invention

The invention relates to a sawing unit, in particular for machining wooden workpieces or workpieces made of a material that is similar to wood, and a (circular) saw apparatus comprising the aforesaid sawing unit.

Specifically, but not exclusively, the sawing unit and the corresponding saw apparatus can be usefully employed in a machine for sectioning panels.

In particular, reference is made to a sawing unit having a blade the height of which is variable, in particular for enabling the blade to disappear below the horizontal supporting plane of the workpiece during the return stroke along the cutting axis and/or for adjusting the protrusion of the blade above the supporting plane.

Circular saws for wood are already known that have a circular blade that can be raised and lowered and which is connected to a drive motor by a blade-height varying device, in such a manner as to prevent or limit the movements of great masses, in particular the mass of the drive motor.

DE 19532726 shows a circular saw with a carriage that is horizontally movable below the workpiece-holding table and a vertically movable blade-holding slide, in which a motor arranged on the carriage drives the blade by a continuous drive belt guided by a group of pulleys comprising a pulley that is coaxial to the drive shaft, a pulley that is coaxial to the blade shaft, a pulley mounted on the lower end of the blade-holding slide and two auxiliary pulleys arranged on the carriage on top of one another; the belt branches coming from the drive shaft are guided by the auxiliary pulleys arranged on the carriage; the belt branch that leaves the upper auxiliary pulley is guided on the pulley that is coaxial to the blade and the belt branch that leaves the lower auxiliary pulley is guided on the pulley mounted at the bottom on the slide.

EP 1815930 shows a circular saw for wood in which the protrusion of the saw, above the table on which the workpiece is supported, can be varied by a double rocker device, in which a lower rocker is connected to the drive shaft, an upper rocker is connected to the saw shaft and the two rockers are connected together on a movable axis.

EP 1990114 shows a circular saw carried by a vertically movable carriage on a base; the saw is driven, via a dual belt transmission, by a motor arranged on a rocker hinged on the carriage; the motor is supported by an arm hinged on one side to the rocker and on the other side to the base; simultaneously with the vertical movement of the carriage the motor performs a movement comprising about two linear movements.

EP 1992438 shows a circular saw with a blade of adjustable height arranged on an adjusting carriage that is movable with respect to the axis of the drive shaft, wherein a drive belt is guided around the drive shaft, around the blade shaft, around a first transmission pulley in a fixed position compared with the axis of the drive shaft and around a second transmission pulley that is movable together with the axis of the blade shaft to compensate for the variation of the distance between the drive shaft and the blade shaft.

### Summary of the invention

One object of the invention is to make a saw unit the height of which is variable.

One advantage is to permit a height-varying movement in which the blade moves in relation to the workpiece machining plane.

One advantage is to enable the height of the blade to be varied, limiting movements of great mass, in particular of the mass of the drive motor, in a vertical direction.

One advantage is to enable the height of the blade to be varied without varying the height of the motor.

One advantage is to simplify the control of the height of the blade and to improve the quality and the precision of the workpieces machined by the saw unit.

One advantage is to provide a constructionally simple and cheap sawing unit.

One advantage is to rotate the blade by a motor of relatively large size without problems of interference with other elements.

One object of the invention is to provide a circular sawing apparatus having the aforesaid sawing unit.

Such objects and advantages and still others are all achieved by the saw unit and apparatus according to one or more of the claims set out below.

In one example, a sawing unit comprises a movable blade carriage for varying the height of the blade and a motor carriage that is movable with respect to the blade carriage, in which the blade carriage carries a blade shaft that rotates the blade and in which the motor carriage carries a shaft motor that is connected to the blade shaft by motion transmitting means that comprises at least one endless flexible tensile member arranged between the blade carriage and the motor carriage; the saw unit comprises a connecting rod that is articulated to the motor carriage and to the blade carriage.

### Brief description of the drawings

The invention can be better understood and implemented with reference to the attached drawings that illustrate one example by way of non-limiting example.

Figure 1 is a perspective view of a circular sawing apparatus of known type.

Figure 2 is a perspective view of an example of a saw unit according to the invention.

Figure 3 is a vertical raised side view of the saw unit of figure 2.

Figure 4 is a view from the left of figure 3.

Figure 5 is a view as in figure 4 with the saw unit in a different operating configuration.

### Detailed description

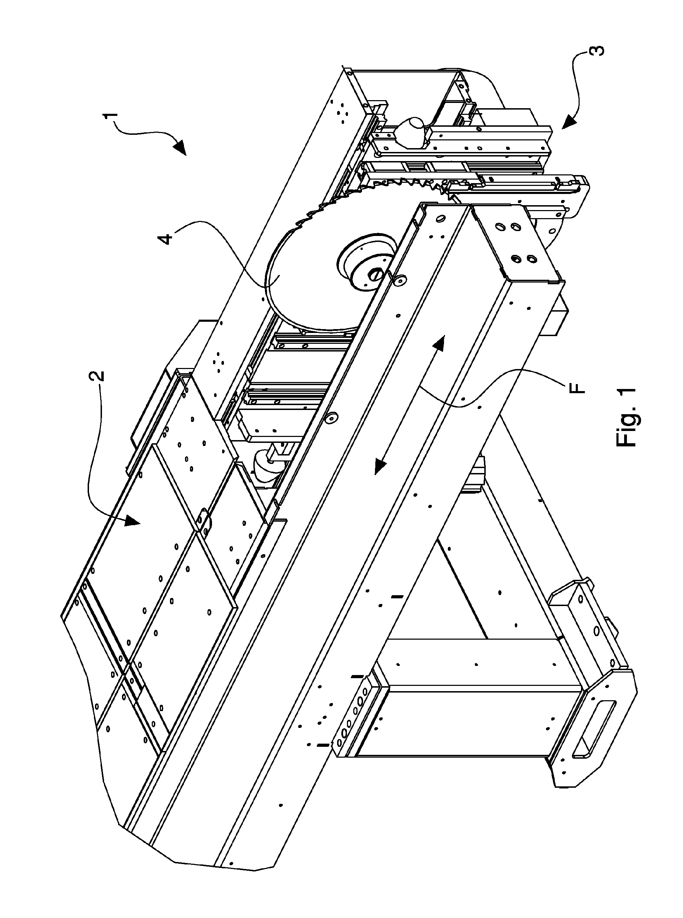

With reference to Figure 1, overall with 1 a circular sawing apparatus of known type has been indicated, for machining wooden workpieces or workpieces made of a material that is similar to wood. In particular, the saw apparatus can be used for machining (sectioning) workpieces in the form of panels.

The saw apparatus 1 comprises a workpiece-holding table 2 and a saw unit 3 that is movable below the supporting table. The saw unit 3 is movable in a direction F (both ways) that is substantially parallel to the (horizontal) working plane defined by the supporting table 2.

With the saw unit 3 is operationally associated with at least one circular blade 4 that traverses the supporting table 2 and the height of which is variable so as to take the blade below the (horizontal) supporting plane of the workpiece defined by the table 2 in a position of disengagement from the workpiece and/or so as to adjust the protrusion of the blade above the aforesaid supporting plane.

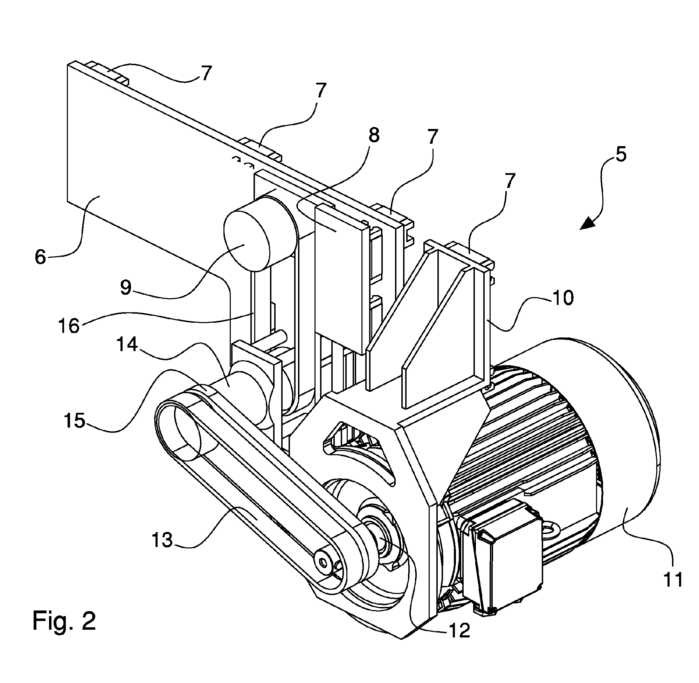

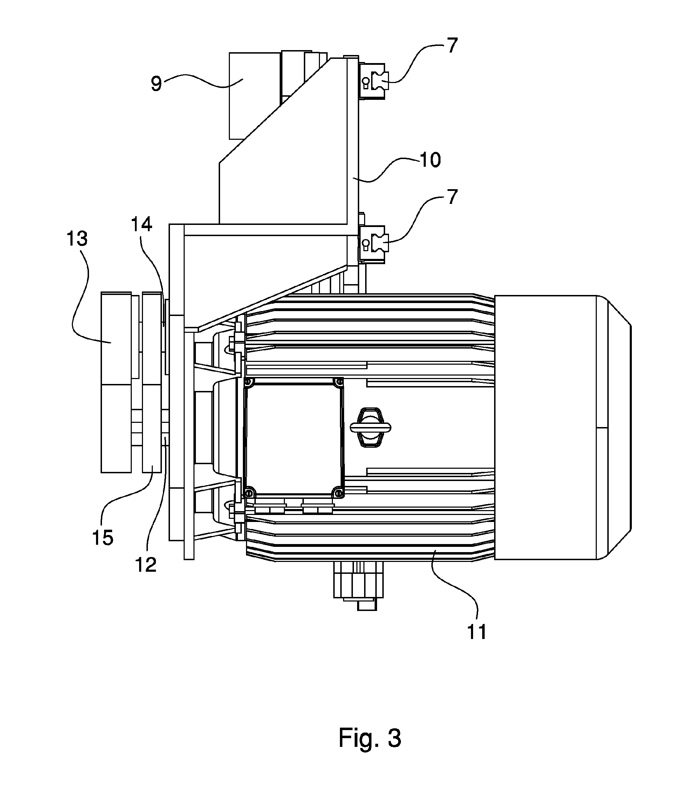

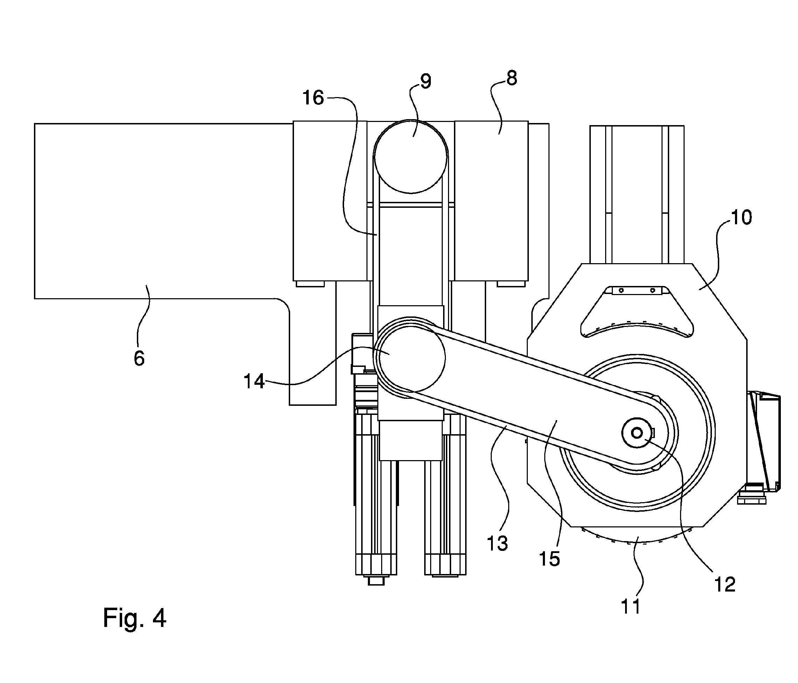

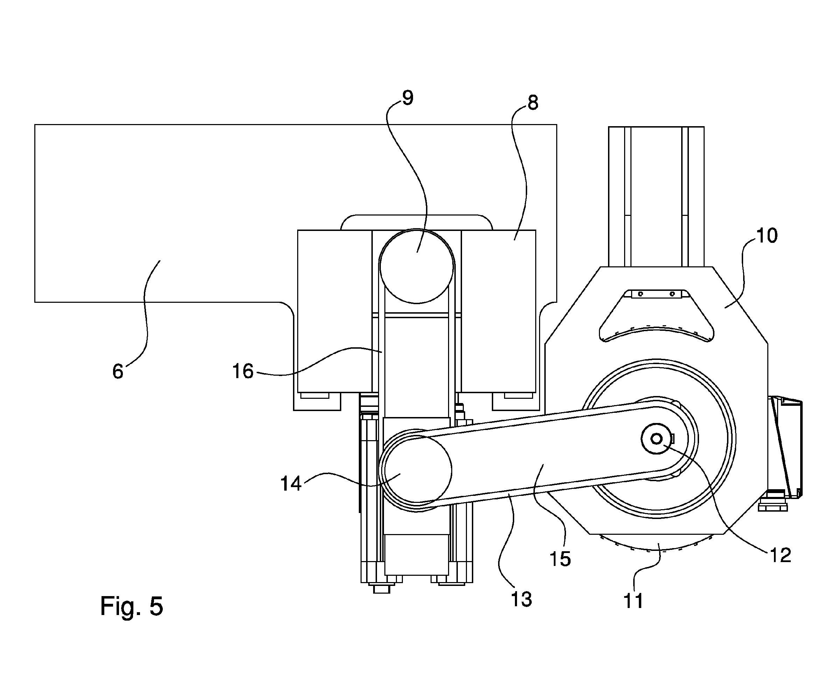

With reference to figures 2 to 5, an example is now disclosed of a saw unit 5 made according to the present invention. The saw unit 5 may be applied, for example, to the saw apparatus 1 of Figure 1 in replacement of the saw unit 3 of known type. Thus, also the saw unit 5 will be movable below the supporting table 2 in the direction F (both ways). Also with the saw unit 3 at least one circular blade 4 will be operationally associated that traverses the supporting table 2 and the height of which is variable so as to adopt a disengagement position below the table 2 and/or so as to adjust the protrusion of the blade above the table 2.

The saw unit 5 according to the invention comprises a support 6 coupled with a frame of the saw apparatus 1.

The support 6 will be movable on the frame at the command of driving means. The support 6 may be, in particular, coupled with guide means on the frame with the possibility of sliding in the machining direction F parallel to the supporting table 2. In particular, the support 6 is coupled with the frame of the saw apparatus 1 by (horizontal) linear sliding guides 7.

The saw unit 5 comprises a blade carriage 8 that is slidable on the support with the possibility of performing an adjusting movement (for varying the blade height) having at least one motion component in a vertical direction. In particular, the blade carriage 8 is linearly slidable, for example in a vertical direction, both ways.

The saw unit 5 comprises a blade shaft 9 carried by the blade carriage 8. The blade shaft 9 is arranged for rotating a blade, in particular the circular saw blade 4. The height of the blade shaft 9 will thus be variable (together with the blade 4) through the effect of the adjusting movement of the blade carriage 8.

The saw unit 5 comprises a motor carriage 10 slidable in relation to the blade carriage 8 with the possibility of performing a sliding movement having at least one movement component in a horizontal direction. In particular, the motor carriage 10 is linearly slidable, for example in a horizontal direction, both ways. The motor carriage 10 may be slidably coupled with guiding means (of linear type) arranged on the support 6 or on the frame of the saw apparatus 1. In the specific case, the motor carriage 10 is coupled with guide means arranged on the frame of the saw apparatus 1, for example the same guide means (horizontal linear guides 7) with which the support 6 is slidingly coupled that carries the blade carriage 8.

The saw unit 5 comprises a motor 11 carried by the motor carriage 10. The motor 11 is arranged for driving the rotation movement of the blade shaft 9. The motor will have a motor shaft 12 with a rotation axis parallel to the rotation axis of the blade shaft 9 and/or parallel to the movement axis of the support 6 below the supporting table 2 supporting the workpiece. In this case, the rotation axis of the motor shaft 12 will be horizontal.

The saw unit 5 comprises motion transmitting means suitable for transmitting the motion from the motor shaft 12 to the blade shaft 9. The transmission means may comprise, as in this example, at least one flexible tensile member 13 operating between the motor carriage 10 and the blade carriage 8.

The saw unit 5 comprises movement means for moving the motor carriage 10 according to the adjusting movement so as to maintain substantially constant the distance between the shafts around which the flexible traction member 13 is wound. In the specific case, the aforesaid movement means is arranged in such a manner that the (horizontal) sliding movement of the motor carriage 10 depends on the (vertical) adjusting movement of the blade carriage 8. The aforesaid movement means may be of the mechanical type, as in the specific example that will be disclosed in greater detail below, or of electronic type (for example an electronic cam that controls the driving means of the motor carriage 10 according to the movement of the blade carriage 8, that may be provided with further driving means that is distinct from the means driving the motor carriage 10).

The aforesaid motion transmitting means comprises in the specific case an auxiliary shaft 14 that is rotatably carried by the blade carriage 8 and connected to the blade shaft 9 so as to transmit the rotation motion to the latter. The flexible tensile member 13 is wound endlessly around the motor shaft 12 and around the auxiliary shaft 14 (by pulleys splined on respective shafts).

In the example disclosed here the movement means is arranged for moving the motor carriage 10 (sliding movement) such that the distance between the motor shaft and the auxiliary shaft 14 remains substantially constant during the blade-height adjusting movement performed by the blade carriage 8.

As said, in the case in question, the aforesaid movement means comprises mechanical connecting means arranged for connecting together the motor carriage 10 and the blade carriage 8 in such a manner as to transform the adjusting movement (performed by the blade carriage 8 at the command of driving motor means) into the sliding movement (performed by the motor carriage 10 slaved to the movement of the blade carriage 8).

More in particular, the mechanical connecting means comprises a connecting rod 15 articulated on the one side to the motor carriage 10 and on the other side to the blade carriage 8. In greater detail, the connecting rod 15 is articulated to the motor carriage 10 about an articulation axis coaxial with the motor shaft 12, and is articulated to the blade carriage 8 about a second articulation axis coaxial with the auxiliary shaft 14. The connecting rod 15 thus permits the sliding movement of the motor carriage 10 so as to maintain substantially constant the distance between centers on which the flexible member 13 is wound and tensioned.

In order to connect together the blade shaft 8 and the auxiliary shaft 14, a second flexible tensile member 16 may be wound endlessly around the blade shaft 8 and around the auxiliary shaft 14 (by pulleys splined on respective shafts).

The saw unit 5 comprises driving means, for example a (vertical axis) linear actuator, arranged on the support 6 for driving the adjusting movement of the blade carriage 8. The linear actuator may be a fluid, electric, etc. actuator.

In use, the rotation motion of the motor shaft 12 will be transmitted to the blade shaft 9 by the flexible members 13 and 16. Further, in order to vary the height of the blade 4, the driving means (linear actuator) of the adjusting movement of the blade carriage 8 will be controlled (by an electronic control unit) to move up and down the blade carriage 8 and, consequently, the blade 4 carried by the carriage. By virtue of the articulated coupling achieved thanks to the connecting rod 15, the motor carriage 10 will move (horizontal sliding movement) as a consequence of the adjusting movement of the blade carriage 8 (consistently with the degree of liberty supplied thereto by the system) so as to maintain constant the distance on which the flexible member 13 is wound.

It is possible to provide an example that is not illustrated that differs from the example disclosed above by the fact that the motion transmission system comprises an endless (single) flexible member wound directly around the motor shaft and around the blade shaft, in particular without the interposition of an intermediate auxiliary shaft and of a second endless flexible member.

## Claims

1. Saw unit (5) comprising:
- a support (6);
- a blade carriage (8) that is slidable on said support (6) with the possibility of performing an adjusting movement that has at least one motion component in a vertical direction;
- a blade shaft (9) carried by said blade carriage, said blade shaft being arranged for rotating a blade and being variable in height through the effect of said adjusting movement;
- a motor carriage (10) that is slidable with respect to said blade carriage (8) with the possibility of performing a sliding movement having at least one motion component in a horizontal direction;
- a motor (11) carried by said motor carriage (10), said motor having a motor shaft (12);
- transmission means for transmitting motion from said motor shaft (12) to said blade shaft (9), said transmission means comprising at least one flexible tensile member (13) operating between said motor carriage (10) and said blade carriage (8);
- movement means for moving said motor carriage (10) in relation to said blade carriage (8).

2. Saw unit according to claim 1, comprising an auxiliary shaft (14) that is rotatably carried by said blade carriage (8) and connected to said blade shaft (9) through said transmission means, said at least one flexible tensile member (13) being wounded around said motor shaft (12) and around said auxiliary shaft (14), said movement means being arranged for moving said motor carriage (10) such that the distance between said motor shaft (12) and said auxiliary shaft (14) remains substantially constant during said adjusting movement.

3. Saw unit according to claim 1 or 2, wherein said movement means comprises mechanical connecting means for connecting together said motor carriage (10) and said blade carriage (8) such as to transform said adjusting movement into said sliding movement and/or vice versa.

4. Saw unit according to claim 3, wherein said mechanical connecting means comprises a connecting rod (15) articulated on one side to said motor carriage (10) and on the other side to said blade carriage (8).

5. Saw unit according to claim 4, wherein said connecting rod (15) is articulated to said motor carriage (10) around an articulating axis that is coaxial with said motor shaft (12).

6. Saw unit according to claims 5, 4, 3 and 2, wherein said connecting rod (15) is articulated to said blade carriage (8) around a second articulating axis that is coaxial with said auxiliary shaft (14).

7. Saw unit according to any one of claims 3 to 6, comprising driving means, for example a linear actuator, operating on said blade carriage (8) to drive said adjusting movement.

8. Saw unit according to any preceding claim, wherein said motor carriage (10) is linearly slidable, for example in a horizontal direction, and said blade carriage (8) is linearly slidable, for example in a vertical direction.

9. Saw unit according to any preceding claim, wherein said movement means moves said motor carriage (10) with respect to said blade carriage (8) such that the distance between two shafts around which said flexible tensile member (13) is wound remains substantially constant during said adjusting movement.

10. Saw apparatus (1) comprising a supporting table (2) supporting a workpiece, guide means (7) guiding a saw unit and a saw unit (5) coupled with said guide means with the possibility of moving below said supporting table, said saw unit having a saw blade (4) that traverses said supporting table (2), said saw blade being variable in height, **characterised in that** said saw unit is made according to any one of claims 1 to 9.

11. Saw apparatus according to claim 10, wherein with said guide means (7) both said support (6) and said motor carriage (10) are slidably coupled.
